Europäisches Patentamt

European Patent Office

Office européen des brevets

(11) Numéro de publication: **0 299 945**
A2

# (12) DEMANDE DE BREVET EUROPEEN

(21) Numéro de dépôt: **88870122.4**

(22) Date de dépôt: **12.07.88**

(51) Int. Cl.⁴: **C 04 B 35/00**
C 04 B 35/80

(30) Priorité: **16.07.87 BE 8700799**

(43) Date de publication de la demande:
**18.01.89 Bulletin 89/03**

(84) Etats contractants désignés:
**AT BE DE FR GB IT LU NL**

(71) Demandeur: **CENTRE DE RECHERCHES METALLURGIQUES CENTRUM VOOR RESEARCH IN DE METALLURGIE Association sans but lucratif Vereniging zonder winstoogmerk Rue Montoyer, 47 B-1040 Bruxelles (BE)**

(72) Inventeur: **Piret, Jacques**
**61/034, Quai de Rome**
**B-4000 Liege (BE)**

(74) Mandataire: **Lacasse, Lucien Emile et al CENTRE DE RECHERCHES METALLURGIQUES Abbaye du Val-Benoît 11, rue Ernest Solvay B-4000 Liège (BE)**

(54) **Procédé pour réaliser l'auto-contrainte à chaud d'un corps réfractaire.**

(57) Procédé pour réaliser l'auto-contrainte à chaud d'un élément constitué d'un premier matériau réfractaire, qui consiste à incorporer à cet élément des corps constitués d'un second matériau réfractaire présentant un coefficient de dilatation thermique inférieur à celui du premier matériau réfractaire ainsi qu'une résistance à la traction élevée à la température d'utilisation. Ces corps peuvent être notamment des barreaux ou des fibres; ils sont constitués d'au moins un matériau réfractaire choisi dans le groupe comprenant le carbure de silicium, le nitrure de silicium, les cermets, les fibres de carbone et les matériaux composites contenant des fibres de carbone, ainsi que l'alumine frittée.

EP 0 299 945 A2

Bundesdruckerei Berlin

## Description

### Procédé pour réaliser l'auto-contrainte à chaud d'un élément réfractaire

La présente invention concerne un procédé pour réaliser l'auto-contrainte à chaud d'un élément réfractaire.

Par élément réfractaire il faut entendre, au sens de la présente invention, un élément constitué d'un matériau réfractaire tel que l'on en utilise en particulier dans les installations de production et de traitement des métaux.

On sait qu'en raison de leur structure granulaire, analogue à celle du béton, les matériaux réfractaires présentent une résistance à la traction et au cisaillement que l'on doit en pratique considérer comme nulle. Une telle limitation constitue un sérieux inconvénient, en particulier dans le cas des pièces qui sont soumises en service à des sollicitations de flexion.

Dans le cas des pièces en béton classique, on utilise à l'heure actuelle deux techniques permettant d'éviter la ruine par flexion. Une première solution consiste à doter l'élément d'une armature métallique qui assure certes la résistance à la traction, mais qui n'empêche cependant pas la fissuration du matériau en service. L'autre technique consiste à appliquer à l'élément une précontrainte adéquate, c'est-à-dire une contrainte de compression au moins égale, en valeur absolue, à la contrainte de traction maximale pouvant apparaître en service dans l'élément. Cette précontrainte peut être appliquée par différents moyens connus, tels que des barres métalliques traversant l'élément et mises en traction entre des appuis d'extrémité.

Ces solutions connues ne sont cependant pas applicables dans le cas des éléments réfractaires qui sont exposés à la fois à des sollicitations mécaniques de flexion ou de traction et à des températures élevées, pouvant atteindre le point de fusion du métal, en particulier de l'acier.

Il n'existe en effet aucun acier présentant, au-delà d'environ 500°C, une résistance suffisante pour reprendre les efforts de traction ou pour transmettre les efforts importants nécessaires à l'application d'une précontrainte à de telles températures. En outre, la forte dilatation des barres en acier rendrait inopérante toute précontrainte appliquée de façon conventionnelle.

La présente invention a pour objet un procédé permettant de réaliser l'auto-contrainte d'un élément réfractaire à des températures pouvant atteindre le point de fusion de l'acier.

Conformément à la présente invention, un procédé pour réaliser l'autocontrainte à chaud d'un élément réfractaire, est caractérisé en ce que l'on incorpore au premier matériau réfractaire constituant ledit élément, des corps constitués d'un second matériau réfractaire présentant un coefficient de dilatation thermique inférieur à celui dudit premier matériau réfractaire, ainsi qu'une résistance à la traction élevée à la température d'utilisation.

Cette résistance à la traction est avantageusement comprise entre 60 et 3000 N/mm².

Selon une variante du procédé de l'invention, lesdits corps sont des barreaux, éventuellement pourvus d'un relief superficiel, qui sont par exemple fabriqués par pressage. Ils sont de préférence placés dans les zones de l'élément réfractaire soumises à des contraintes de traction ou de cisaillement.

Selon une autre variante du procédé de l'invention, lesdits corps sont des fibres que l'on disperse au sein du premier matériau réfractaire constituant ledit élément. Ces fibres ont avantageusement une longueur comprise entre 0,5 mm et 15 mm, afin d'assurer l'auto-contrainte requise sans se rompre, et un diamètre compris entre 5 μm et 100μm. A cet effet, on peut notamment utiliser des trichites.

Parmi les matériaux utilisables pour fabriquer lesdits corps, on peut citer entre autres l'alumine frittée, le carbure de silicium, le nitrure de silicium et notamment le nitrure de silicium avec des liaisons du type alumine (SIALON), les cermets, les fibres de carbone et divers matériaux composites contenant des fibres de carbone.

Toujours selon l'invention, on peut ajouter audit élément réfractaire une charge constituée par une substance réductrice, destinée à combattre l'oxydation des corps d'auto-contrainte incorporés à l'élément réfractaire.

A titre d'exemple, on indiquera que l'on a réalisé des pièces en alumine pure dans lesquelles étaient dispersées des fibres de carbure de silicium, à raison d'environ 1 % en volume. Ces fibres présentent une résistance à la traction d'au moins 2500 N/mm² à 1000 °C et un coefficient de dilatation thermique valant environ 50 % de celui de l'alumine pure. Les essais ont montré qu'à partir d'environ 400 °C-500 °C, les fibres de carbure de silicium sont le siège de contraintes de traction, tandis que l'alumine qui les entoure est soumise à la compression.L'alumine est donc "auto-contrainte".

Le procédé de l'invention présente un intérêt particulier pour la fabrication de rouleaux de guidage utilisés dans les fours de recuit continu, où ils sont soumis à une sollicitation de fatigue par flexion rotative à haute température. Il n'est cependant pas limité à cette application, car il permet également d'améliorer la résistance et la durée de vie de divers types de pièces utilisées notamment pour la coulée des métaux en fusion. Il convient encore de souligner qu'en plus du fait qu'ils assurent l'auto-contrainte à chaud de l'élément réfractaire, les corps précités jouent, à toute température, un rôle plus classique d'armature de cet élément réfractaire.

Le procédé est applicable aussi bien aux bétons réfractaires qu'aux produits réfractaires façonnés, denses ou isolants grâce à une certaine porosité.

Un cas d'application particulièrement intéressant est celui de matériaux réfractaires dont la matrice de liaison intergranulaire est de type carboné et obtenue par cuisson réductrice, ce qui est le cas par exemple des pièces de coulée continue en alumine graphitée (busettes...) ou des briques en magnésie carbone.

La caractéristique de ce type de liaison est de posséder une grande "souplesse" qui se caractérise par un module d'élasticité plus faible; grâce à cette propriété, la répartition des contraintes entre le granulat du matériau et les corps d'auto-contrainte est meilleure que lorsque le matériau est rigide.

## Revendications

1. Procédé pour réaliser l'auto-contrainte à chaud d'un élément réfractaire, caractérisé en ce que l'on incorpore au premier matériau réfractaire constituant ledit élément, des corps constitués d'un second matériau réfractaire présentant un coefficient de dilatation thermique inférieur à celui dudit premier matériau réfractaire ainsi qu'une résistance à la traction élevée à la température d'utilisation.

2. Procédé suivant la revendication 1, caractérisé en ce que lesdits corps sont des barreaux, éventuellement pourvus d'un relief superficiel.

3. Procédé suivant la revendication 2, caractérisé en ce que l'on place lesdits barreaux dans les zones dudit élément réfractaire soumises à des contraintes de traction ou de cisaillement.

4. Procédé suivant la revendication 1, caractérisé en ce que lesdits corps sont des fibres.

5. Procédé suivant la revendication 4, caractérisé en ce que lesdites fibres ont une longueur comprise entre 0,5 mm et 15 mm et un diamètre compris entre 5 µm et 100 µm.

6. Procédé suivant l'une ou l'autre des revendications 4 et 5, caractérisé en ce que l'on disperse lesdites fibres au sein du matériau réfractaire constituant ledit élément.

7. Procédé suivant l'une ou l'autre des revendications 1 à 6, caractérisé en ce que lesdits corps sont constitués d'au moins un matériau réfractaire choisi dans le groupe comprenant l'alumine frittée, le carbure de silicium, le nitrure de silicium, les cermets, les fibres de carbone et les matériaux composites contenant des fibres de carbone.

8. Procédé suivant l'une ou l'autre des revendications 1 à 7, caractérisé en ce que lesdits corps présentent une résistance à la traction comprise entre 60 et 3000N/mm$^2$.

9. Procédé suivant l'une ou l'autre des revendications 1 à 8, caractérisé en ce que le premier matériau réfractaire possède une matrice de liaison intergranulaire de type carboné.